## Europäisches Patentamt

## European Patent Office

## Office européen des brevets

(19)

(11) **EP 1 135 707 B1**

(12) **EUROPÄISCHE PATENTSCHRIFT**

(45) Veröffentlichungstag und Bekanntmachung des Hinweises auf die Patenterteilung:
**20.08.2003 Patentblatt 2003/34**

(21) Anmeldenummer: **99950610.8**

(22) Anmeldetag: **04.10.1999**

(51) Int Cl.⁷: $G02B\ 6/293$, $G01J\ 3/18$, $H04B\ 10/08$, $H04B\ 10/145$

(86) Internationale Anmeldenummer:
**PCT/EP99/07340**

(87) Internationale Veröffentlichungsnummer:
**WO 00/021224 (13.04.2000 Gazette 2000/15)**

(54) **ANORDNUNG UND VERFAHREN ZUR ÜBERWACHUNG DER PERFORMANCE VON DWDM MEHRWELLENLÄNGENSYSTEMEN**

ARRAY AND METHOD FOR MONITORING THE PERFORMANCE OF DWDM MULTIWAVELENGHT SYSTEMS

DISPOSITIF ET PROCEDE POUR SURVEILLER LE COMPORTEMENT DE SYSTEMES A LONGUEURS D'ONDE MULTIPLES DWDM

(84) Benannte Vertragsstaaten:
**AT BE CH CY DE DK ES FI FR GB GR IE IT LI LU MC NL PT SE**

(30) Priorität: **05.10.1998 DE 19845701**

(43) Veröffentlichungstag der Anmeldung:
**26.09.2001 Patentblatt 2001/39**

(60) Teilanmeldung:
**02017938.8 / 1 255 365**

(73) Patentinhaber: **Tektronix Munich GmbH**
**85757 Karlsfeld (DE)**

(72) Erfinder:
- **BANDEMER, Adalbert**
  **85221 Dachau (DE)**
- **PALME, Dieter**
  **80993 München (DE)**

(74) Vertreter: **Schurack, Eduard F. et al**
**Hofstetter, Schurack & Skora**
**Balanstrasse 57**
**81541 München (DE)**

(56) Entgegenhaltungen:
| | |
|---|---|
| EP-A- 0 855 811 | EP-A- 0 859 249 |
| DE-A- 2 437 253 | DE-A- 19 816 612 |
| US-A- 3 917 407 | US-A- 3 936 191 |
| US-A- 4 025 196 | US-A- 4 299 488 |
| US-A- 5 396 361 | US-A- 5 420 416 |
| US-A- 5 532 818 | US-A- 5 812 262 |

- BISCHOFF M ET AL: "OPERATION AND MAINTENANCE FOR AN ALL-OPTICAL TRANSPORT NETWORK" IEEE COMMUNICATIONS MAGAZINE,US,IEEE SERVICE CENTER. PISCATAWAY, N.J, Bd. 34, Nr. 11, November 1996 (1996-11), Seite 136-142 XP000636137 ISSN: 0163-6804
- AMRANI A ET AL: "Degradation surveillance module for optical transport networks" CONFERENCE PROCEEDINGS. LEOS'98. 11TH ANNUAL MEETING. IEEE LASERS AND ELECTRO-OPTICS SOCIETY 1998 ANNUAL MEETING (CAT. NO.98CH36243), CONFERENCE PROCEEDINGS. LEOS'98. 11TH ANNUAL MEETING. IEEE LASERS AND ELECTRO-OPTICS SOCIETY 1998 ANNUAL MEETING, OR, - 1. Dezember 1998 (1998-12-01) Seiten 289-290 vol.1, XP002134591 1998, Piscataway, NJ, USA, IEEE, USA ISBN: 0-7803-4947-4
- AMRANI A ET AL: "Optical monitoring system for scalable all-optical networks" CONFERENCE PROCEEDINGS. LEOS '97, 10TH ANNUAL MEETING. IEEE LASERS AND ELECTRO-OPTICS SOCIETY 1997 ANNUAL MEETING (CAT. NO.97CH36057), CONFERENCE PROCEEDINGS. LEOS '97. 10TH ANNUAL MEETING IEEE LASERS AND ELECTRO-OPTICS SOCIETY 1997 ANNUAL MEETING, S, - 10. November 1997 (1997-11-10) Seiten 270-271 vol.2, XP002134592 1996, New York, NY, USA, IEEE, USA ISBN: 0-7803-3895-2

- **BERGER M ET AL: "PAN-EUROPEAN OPTICAL NETWORKING USING WAVELENGTH DIVISION MULTIPLEXING" IEEE COMMUNICATIONS MAGAZINE,US,IEEE SERVICE CENTER. PISCATAWAY, N.J, Bd. 35, Nr. 4, 1. April 1997 (1997-04-01), Seiten 82-88, XP000693608 ISSN: 0163-6804**
- **ASAHI K ET AL: "Optical performance monitor built into EDFA repeaters for WDM networks" OFC '98. OPTICAL FIBER COMMUNICATION CONFERENCE AND EXHIBIT. TECHNICAL DIGEST. CONFERENCE EDITION. 1998 OSA TECHNICAL DIGEST SERIES VOL.2 (IEEE CAT. NO.98CH36177), OFC '98 OPTICAL FIBER COMMUNICATION CONFERENCE AND EXHIBIT. TECHNICAL DIGEST CONFERENC, Seiten 318-319, XP002134593 1998, Washington, DC, USA, Opt. Soc. America, USA ISBN: 1-55752-521-8**

Bemerkungen:
    Die Akte enthält technische Angaben, die nach dem Eingang der Anmeldung eingereicht wurden und die nicht in dieser Patentschrift enthalten sind.

**Beschreibung**

Die vorliegende Erfindung betrifft eine Anordnung zur Überwachung der Performance von DWDM Mehrwellenlängensystemen mit einem optischen Bandpassfilter in Form eines optischen Spektrometers mit einer Eingangsapertur und einer Ausgangsapertur, wobei auf die Ausgangsapertur eine Auswerteeinheit folgt, die ein optoelektronisches Detektorsystem mit einer elektronischen Signalverarbeitung umfasst. Sie betrifft überdies ein korrespondierendes Überwachungsverfahren.

Bei dichtgepackten WDM-Systemen (dense WDM, DWDM) werden Nachrichten über Lichtsignale bei verschiedenen Wellenlängen über nur eine Faser übertragen. Jede Wellenlänge ist Träger eines Informationssignals. Dabei liegen alle Kanäle innerhalb des Wellenlängenbereichs von zur Zeit ca. 1520 nm bis 1565 nm. Der Kanalabstand beträgt wenige Nanometer bzw. einige hundert Picometer. Von der internationalen ITU-T Arbeitsgruppe wurden dabei zur Standardisierung dieser Telekommunikationssysteme die zu verwendenden Wellenlängen (entspricht den Kanälen) mit einem Kanalabstand von 100 GHz ($\approx$ 0.8 nm) als Standard empfohlen. Die weitere Entwicklung dieser DWDM-Systeme zielt auf die Erweiterung des nutzbaren Wellenlängenbereiches bis z. B. 1610 nm.

An vielen Stellen dieses Übertragungssystems werden Anordnungen zur laufenden Überwachung aller charakteristischer Parameter mit der Möglichkeit der Signalregeneration oder -verbesserung benötigt. Zu den wichtigsten Parametern gehören dabei die Wellenlänge und die Leistung aller Kanäle, die Überwachung der Linienbreite und der Wellenlängendrift der Laser, sowie das Signal-Rausch-Verhältnis in jedem Übertragungskanal. Typische Spezifikationsanforderungen für die Überwachung sind dabei:

- Wellenlängenmessung pro Kanal mit 0.08 nm absoluter Genauigkeit und 0.01 nm Auflösung
- Leistungsmessung pro Kanal mit 0.5 dB absoluter Genauigkeit und 0.1dB Auflösung
- S/N-Messung zwischen den Kanälen mit 0.4 dB absoluter Genauigkeit, 0.1 dB Wiederholbarkeit und einer Dynamik von mindestens 33 dB
- Zuverlässigkeit über $10^{10}$ Meßzyklen (ca. 20 Jahre)
- geringe PDL (0.1 dB max.)
- geringe Baugröße.

Zur Überwachung eignen sich grundsätzlich verschiedene Verfahren, die in konventionellen optischen Spektrumanalysatoren zur Anwendung kommen.

Bei der Filtertechnik werden zur Wellenlängenselektion durchstimmbare schmalbandige Filter verwendet. Es kommen akustooptische Filter (z.B. Fa. Wandel & Goltermann) oder piezoelektrisch gesteuerte Mikrofilter (z.B. Fa. Queensgate) oder durchstimmbare Faser-Bragg-Gitter (z.B. Fa. ElectroPhotonics Corp.) zum Einsatz, die direkt über eine elektrische Größe abstimmbar sind.

Die Filtertechnik beschränkt sich nicht nur auf die optische Filterung, sondern sie kann auch nach einer vorausgehenden Umsetzung in elektronische Signale auf der elektrischen Signalebene erfolgen. Bei der elektronischen Filterung wird das optische Signal in einem nichtlinearen optischen Bauelement mit einem optischen Referenzsignal gemischt und die Differenzfrequenzen auf einem elektronischen Spektrenanalyser ausgewertet (Fa. Hewlett Packard).

Eine weitere Variante ist die Gittermonochromatortechnik, bei der entweder das Gitter gedreht und das räumlich aufgelöste Signalspektrum mit einer einzelnen Photodiode abgetastet wird oder das Gitter feststeht und ein scannender Ablenkspiegel vor dem Ausgangsspalt des Monochromators vorgesehen ist, bzw. ein bewegliches Reflexionselement den Einfallswinkel der Strahlung auf das Gitter ändert (z.B. Fa. Photonetics) oder es wird ein feststehendes Gitter zusammen mit einer Photodiodenzeile als Detektoreinheit (z.B. Fa. Yokogawa) verwendet.

Bei der Interferometertechnik wird aus dem Detektorsignal eines Michelson-Interferometers mit variablen Weglängen mit Hilfe der Fouriertransformation das Spektrum gewonnen (z.B. Fa. Hewlett Packard).

In BISCHOF M ET AL: 'OPERATION AND MAINTENANCE FOR AN ALL OPTI-CAL TRANSPORT NETWORK' IEEE COMMUNICATIONS MAGAZINE, US, IEEE SERVICE CENTER. PISCATAWAY, N. J., Bd. 34, Nr. 11, November 1996 (1996-11), Seite 136- 142 XP000636137 ISSN: 0163-6804 wird eine Überwachungsvorrichtung nach dem Oberbegriff von Patentanspruch 1 beschrieben. Diese Druckschrift enthält jedoch nur allgemeine Angaben zur Notwendigkeit der Signalüberwachung.

Aus der DE 24 37 253 ist ein Gittermonochromator bekannt, der gekrümmte Einund Ausgangsspalte verwendet.

Die US-A-3.917.407 beschreibt eine Anordnung und ein Verfahren, das einen Monochromator durch eine elektromechanische Einrichtung auf eine gewünschte Wellenlänge, nämlich gerade der der detektierten Strahlung, mittels eines Modulationsverfahrens nachregelt oder fein abstimmt.

Aus der US-A-3.936.191 ist ein Doppelmonochromator der additiven Form bekannt, wobei es sich um eine schiefe (out of plane) Anordnung handelt, bei der die durch die Strahlen aufgespannte Ebenen schief zur Gitterfurchenrichtung liegen. Die Schieflage ist für die beiden Strahldurchgänge entgegengesetzt.

Aus der US-A-4.299.488 ist schließlich ein Polychromator in Ebert- Anordnung bekannt, bei dem das spektral zerlegte Signal über eine Zeilenanordnung von optischen Laufzeitleitungen wieder rückwärts und in der Ebene versetzt die Anordnung ein zweites Mal durchläuft. Die Anordnung arbeitet subtraktiv und benutzt schiefsymmetrische Strahlebenen für die beiden Durchläufe.

Alle erwähnten, konventionellen Anordnungen sind nicht geeignet, die hohen Anforderungen, die bezüglich Auflösung, Meßgenauigkeit, ASE-Messung und Dynamik an eine Monitoring-Baugruppe für ein DWDM-System gestellt werden, gleichzeitig und in geeigneter Weise zu erfüllen und außerdem den Forderungen nach kurzer Meßzeit, Langlebigkeit und geringem Platzbedarf sowie kostengünstiger Ausführung zu entsprechen.

Aufgabe der Erfindung ist es, eine geeignetes Meßsystem zu realisieren, welches bezüglich Auflösung, Meßgenauigkeit, ASE-Messung und Dynamik, kurzer Meßzeit, Langlebigkeit und geringem Platzbedarf sowie kostengünstiger Ausführung den Anforderungen an ein DWDM-Monitorsystem genügt.

Erfindungsgemäß wird diese Aufgabe gelöst durch eine Anordnung mit den Merkmalen von Patentanspruch 1 und Verfahren mit den Merkmalen von Patentanspruch 9.

Nachfolgend wird eine Ausführungsform der Erfindung unter Bezugnahme auf die beigefügten Zeichnungen näher beschrieben. Es zeigen:

Fig.1    einen prinzipiellen Aufbau eines schmalbandigen optischen Bandpassfilters aus Gitter-Spektrometer und Auswerteeinheit;

Fig. 2    das Prinzip eines Gitter- Spektrometers mit Mehrfachdurchgang;

Fig.3    ein Beispiel zum Aufbau und Strahlengang im Gitter- Spektrometer mit Mehrfachdurchgang; und

Fig. 4    einen Aufbau des Positionssensors.

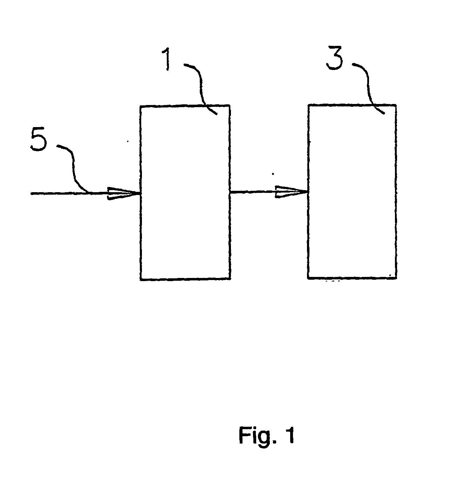

Fig. 1 zeigt den prinzipiellen Aufbau der Ausführung aus Fasereingang 5, schmalbandigem, abstimmbarem Bandpassfilter 1 und Auswerteeinheit 3.

Spektrometer hoher Auflösung benötigen i.a. mehrere dispersive und abbildende Elemente und werden in aufwendiger Weise auf die zu detektierende Wellenlänge eingestellt.

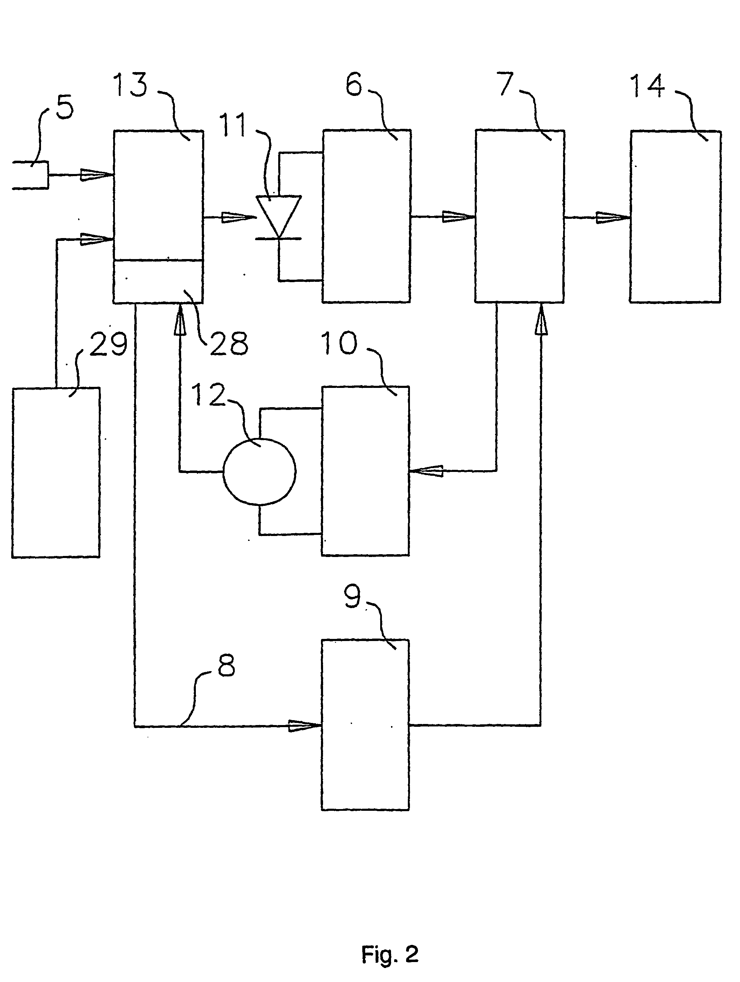

Ein auf der Basis eines Mehrfachspektrografen basierendes System ist in Fig. 2 beispielhaft dargestellt. Das Meßlicht gelangt über eine Lichtleitfaser 5 in die das Spektrometer enthaltende Optikeinheit 13. Das nach einer bestimmten Wellenlänge selektierte Licht gelangt aus der Optikeinheit 13 auf den Photodetektor 11. Das im Photodetektor aus dem Meßlicht gewonnene elektrische Signal wird über ein Tiefpassfilter 6 zum Signalprozessor 7 geführt. Hier erfolgt die Zuordnung der Wellenlänge, die aus dem Positionssignal 8 des Positionssensors 28 durch die Referenzeinheit 9 ermittelt wird und ebenfalls zum Signalprozessor 7 gelangt. Dieser Prozessor erzeugt auch die notwendigen Steuersignale für die Antriebseinheit 10 und den Gitterantrieb 12, die das wellenlängenbestimmende Element in der Optikeinheit 13 verstellt. Die im Signalprozessor errechneten charakteristische Werte für die momentan eingestellte Wellenlänge werden in der Anzeigeeinheit 14 für den Nutzer dargestellt und für eine Weitergabe bereitgestellt.

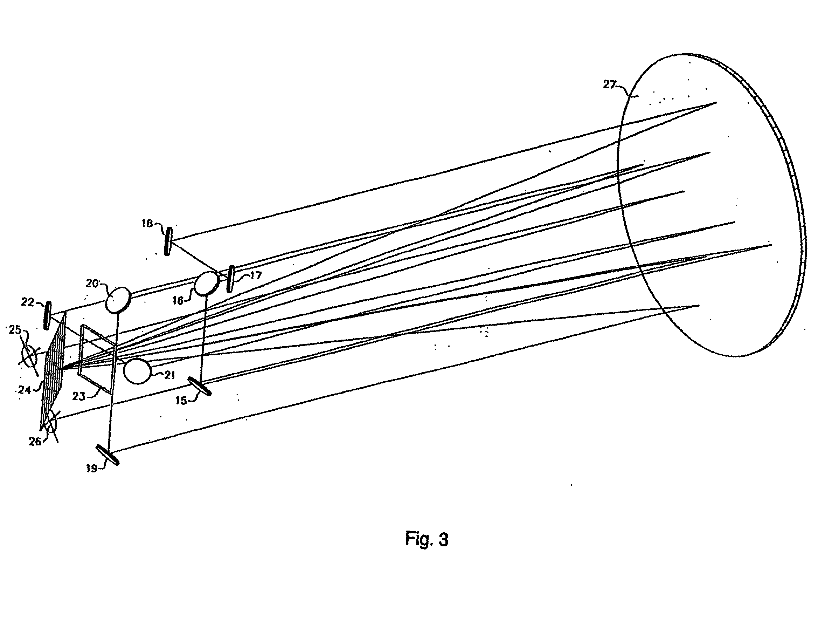

Die Aufgabe eine hohe Auflösung zu erreichen wird durch den Aufbau eines speziellen Gitterspektrometers 1, in dem ein Echelle-Gitter oder ein für den zu überwachenden Wellenlängenbereich geblaztes Gitter in einer gemischten Aufstellung nach Ebert und Fastie näherungsweise in einer Littrow-Anordnung gemäß Fig. 3, erfüllt. Die Lichtwege für ein- und ausfallendes Licht sind dabei nahezu symmetrisch. Durch die Mehrfachnutzung des Gitters und des einen abbildenden Elementes, welches ebenfalls mehrfach genutzt wird, zusammen mit mehreren Strahlumlenksystemen aus Planspiegeln oder Prismen, wird ein kompakter, stabiler, hochdispersiver und kostengünstiger Aufbau erreicht. Ein überwiegend symmetrischer Strahlengang in der optischen Einheit vermindert Abbildungsfehler, die zu einer drastischen Verschlechterung der Auflösung führen würden. Die Bewegung des Gitters zur Wellenlängenselektion kann, da nur ein Element bewegt wird, mit hoher Geschwindigkeit erfolgen. Die Nutzung nur eines Detektorelementes verhindert orts- bzw. elementabhängige Schwankungen der Empfindlichkeit. Außerdem wird eine weitgehende Unabhängigkeit von Polarisationseffekten ohne PDL (Polarisation dependend losses; polarisationsabhängige Verluste) erreicht, da die Strahlen bei dem geblazten Gitter bzw. dem Echelle-Gitter nahezu senkrecht auf die beugenden Gitterflächen treffen und in hohem Einfallswinkel mit kleinem Strahldurchmesser eine große Gitterlänge ausleuchten.

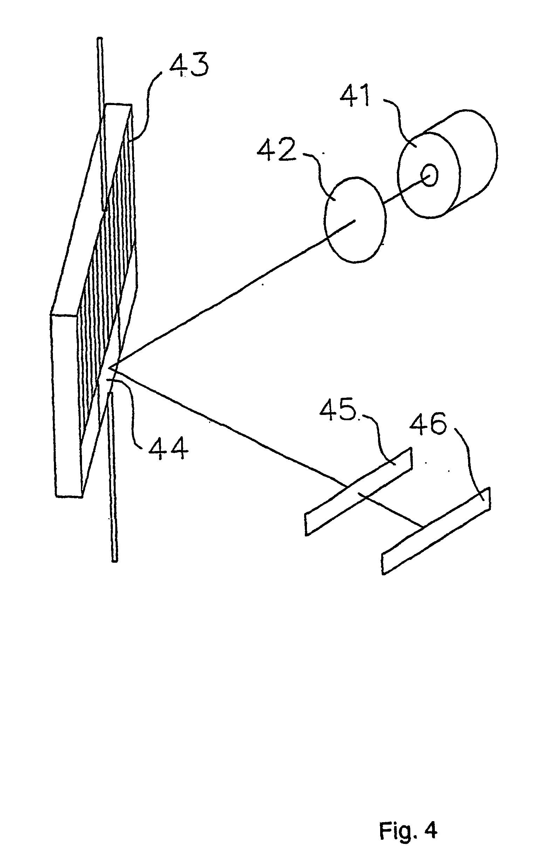

Die für die Zuordnung der Meßwellenlänge maßgebliche Winkelposition des dispergierenden Gitters wird durch eine Hilfseinrichtung, den Positionssensor, nach Fig. 4 bestimmt.

Für ein allgemeines Gitter gilt die Grundgleichung

$$m\lambda = d(\sin \alpha + \sin \beta), \qquad (I)$$

wobei m die Ordnung, d der Linienabstand und $\alpha$, $\beta$ die Ein- bzw. Ausfallwinkel bezeichnen. Da bei einem Gitter in Littrow-Anordnung Ein- und Ausfallwinkel nahezu identisch sind, ergibt sich bei der Aufstellung nach Fastie die Vereinfachung:

$$m\lambda = 2 d \sin \alpha. \qquad (II)$$

Bei der Aufstellung nach Ebert gilt die Grundgleichung (I). Der Strahlenführung wird dabei so ausgelegt, daß ein möglichst symmetrischer Strahlengang bezüglich des Hohlspiegels vorliegt. Da auch hier der Ein- bzw. Ausfallwinkel nahezu gleich sind, ist auch die Winkeldispersion in ähnlicher Größe wie bei der Aufstellung nach Fastie. Durch den mehrfachen, hier z. B. vierfachen Durchgang der Strahlung durch das dispersive Element vervierfacht sich auch die Gesamtdispersion und damit die Auflösung des Gerätes. Der symmetrische Strahlengang bezüglich des abbildenden Hohlspiegels bewirkt wegen der Nutzung symmetrisch liegender Spiegelbereiche eine weitgehende Kompensation der Abbildungsfehler, insbesondere des Astigmatismus, der zu einer erheblichen Verschlechterung der Auflösung führt.

Durch ein dielektrisches optisches Vorfilter als Bandpaß im Mehrfachstrahlengang wird Licht mit Wellenlängen außerhalb des DWDM-Bereiches unterdrückt. Das Filter wird dann z.B. nur von dem ca. 100 nm breite DWDM-Bereich passiert.

Die Detektion des gesamten Spektrums erfolgt durch einen einzigen Strahlungsdetektor, die Einstellung der zu detektierenden Wellenlänge erfolgt durch Verdrehen des Gitters um seine Hochachse, wobei dies sowohl durch einen motorischen Antrieb, als auch durch die Ausbildung als schwingfähige Feder-Masse-Anordnung mit Torsionsfedern erfolgt.

Desweiteren wird die Position des Gitters mit sehr hoher Präzision durch einen Hilfslaser erfaßt. Der fokussierte Strahl des Hilfslasers wird auf eine mit dem Gitter starr verbundene reflektierende Fläche gerichtet und der reflektierte Strahl einem Positionssensor mit einem Inkrementalmaßstab zugeleitet.

Im Fig. 3 ist beispielhaft eine entsprechende Anordnung dargestellt. Das zu untersuchende Licht gelangt durch die Eintrittsöffnung, die als Fasereingang 25 ausgebildet ist, in das optische System. Der divergente Strahlengang wird durch den Kollimator und Kameraspiegel 27 zu einem parallelen Bündel geformt und näherungsweise unter dem Blazewinkel auf das Gitter 24 geleitet. Das gebeugte Bündel gelangt wieder zum Kollimator und Kameraspiegel 27, wird durch diesen fokussiert und gelangt auf die Spiegel 21 und 22, wird dort in der Weise umgelenkt, daß das nun wieder divergente Bündel achsenparallel zum Kollimator und Kameraspiegel 27 geführt wird. Von dort trifft das Parallelbündel wieder das Gitter 24, wird wiederum gebeugt und trifft den Kollimator und Kameraspiegel 27. Von dort wird nun der Strahl zum Spiegel 15 und über die Spiegel 16, 17 und 18 gelenkt. Nunmehr hat der Strahl eine Position oberhalb der optischen Achse erreicht und trifft wieder den Kollimator und Kameraspiegel 27, gelangt von dort wieder zum Gitter 24 und über den Kollimator und Kameraspiegel 27 ein weiteres Mal auf das Gitter 24. Von dort gelangt der noch stärker dispergierte Strahl wieder zum Kollimator und Kameraspiegel 27 und wird von dort zum Spiegel 19 und 20 geführt, trifft dann wieder den Kollimator und Kameraspiegel 27, dann das Gitter 24 und dann letztmalig den Kollimator und Kameraspiegel 27. Der fokussierte und vierfach dispergierte Strahl gelangt dann zum Signalausgang 26. Alle Strahlen, die mehrfach auf das Gitter 24 gelangen und von dort wieder zum Kollimator und Kameraspiegel 27 geführt werden, müssen das dielektrische Bandpassfilter 23 passieren und werden dort auf das Nutzfrequenzband beschnitten.

In Fig. 4 ist beispielhaft die Anordnung der Positionserfassung dargestellt. Das Licht eines Hilfslasers 41 wird durch die Optik 42 auf den Inkrementalmaßstab 45 fokussiert. Die Drehung des Gitters 43 und die damit verbundene Drehung des mit dem Gitter starr verbundenen Spiegels 44 bewirkt eine Auslenkung des Laserstrahles über den Inkrementalmaßstab 45.

Die Beeinflussung der Laserintensität durch den Inkrementalmaßstab wird durch den nachgeordneten Detektor 46 erfaßt und der Auswertung zugänglich gemacht.

## Legende zu den Figuren

| 1 | Gitter- Spektrometer |
|---|---|
| 6 | Tiefpassfilter |
| 7 | Signalprozessor |
| 8 | Positionssignal |
| 9 | Referenzeinheit |
| 10 | Antriebseinheit |
| 11 | Photodetektor, Photodiode |
| 12 | Gitterantrieb |
| 13 | Optikeinheit |
| 14 | Anzeigeeinheit |
| 15 | Spiegel |
| 16 | Spiegel |
| 17 | Spiegel |
| 18 | Spiegel |
| 19 | Spiegel |
| 20 | Spiegel |
| 21 | Spiegel |
| 22 | Spiegel |
| 23 | Dielektrisches Vorfilter, dielektrisches Bandpassfilter |
| 24 | Gitter |
| 25 | Eingang, Fasereingang |
| 26 | Ausgang |
| 27 | Kollimator und Kameraspiegel |
| 28 | Positionssensor |
| 41 | Hilfslaser |
| 42 | Optik |
| 43 | Gitter |
| 44 | Spiegel |
| 45 | Inkrementalmaßstab |
| 46 | Detektor, linienförmige Photodiode |

## Patentansprüche

1. Anordnung zur Überwachung der Performance von DWDM Mehrwellenlängen-Systemen mit einem optischen Bandpaßfilter (1) in Form eines optischen Spektrometers mit einer Eingangsapertur (25) und einer Ausgangsapertur (26), wobei auf die Ausgangsapertur eine Auswerteeinheit (3) folgt, die ein optoelektronisches Detektorsystem (6, 7) mit einer elektronischen Signalverarbeitung umfaßt, **dadurch gekennzeichnet,** **daß** der optische Bandpaßfilter (1) in Form eines optischen Gitterspektrometers ausgeführt und schmalbandig und durchstimmbar ausgebildet ist und weiterhin folgendes aufweist:

- ein Gitter (24) in nahezu Littrow-Anordnung, wobei die Abstimmung des Bandpaßfilters (1) durch Verdrehen des Gitters (24) um seine Hochachse erfolgt;
- einen abbildenden Spiegel (27); und
- eine Mehrzahl von Umlenkspiegeln (15 bis 22);
- wobei die Eingangsapertur (25), das Gitter (24), der abbildende Spiegel (27), die Mehrzahl von Umlenkspiegeln (15 bis 22) und die Ausgangsapertur (26) derart angeordnet sind, daß ein mehrfacher Strahldurchgang erzielt wird, wobei die Einzelkomponenten (25, 24, 27, 15 bis 22, 26) derart angeordnet sind, daß sowohl ein Aufbau nach Ebert als auch ein Aufbau nach Fastie realisiert wird und vom Strahl zunächst ein Aufbau nach Ebert, dann ein Aufbau nach Fastie oder umgekehrt durchlaufen wird.

2. Anordnung nach Anspruch 1, **dadurch gekennzeichnet,** **daß** zur Vermeidung von polarisationsabhängigen Reflexionen als Gitter (24) ein solches mit ruledgrating, das einen nahezu senkrechten Einfall auf das Gitter (24) sicherstellt, vorliegt.

3. Anordnung nach einem der Ansprüche 1 oder 2, **dadurch gekennzeichnet,** **daß** sie ein dielektrisches Vorfilter (23) zur Unterdrückung von Wellenlängen außerhalb des Meßbereiches aufweist, welches aufgrund des mehrfachen Durchlaufens seine wirksame Güte vervielfacht.

4. Anordnung nach einem der vorhergehenden Ansprüche, **dadurch gekennzeichnet,** **daß** das Gitter (24) für eine Drehbewegung oder eine periodisch oszillierende Bewegung zur Wellenlängeneinstellung eingerichtet ist.

5. Anordnung nach einem der vorhergehenden Ansprüche, **dadurch gekennzeichnet,** **daß** das Gitter (24) zur Positionserfassung mit einem optischen Positionssensor (28) gekoppelt ist.

6. Anordnung nach einem der vorhergehenden Ansprüche, **dadurch gekennzeichnet,**

**daß** sie einen Hilfslaser (41) aufweist zur Abtastung des sich bewegenden Gitters (24) zur Gewinnung eines Synchronisiersignals zur Wellenlängenzuordnung des Ausgangssignals der Anordnung.

7. Anordnung nach einem der vorhergehenden Ansprüche, **dadurch gekennzeichnet,** **daß** sie einen Positionssensor (28) aufweist zur Detektion der Stellung des Gitters (24) und damit zur Gewinnung eines Positionssignals (8) des sich bewegenden Gitters (24).

8. Anordnung nach Anspruch 7, **dadurch gekennzeichnet,** **daß** der Positionssensor (28) eine linienförmige Photodiode (46) und einen davor angebrachten Inkrementalstab (45) umfaßt.

9. Verfahren zur Überwachung der Performance von DWDM-Mehrwellenlängen-Systemen mit einem schmalbandigen und durchstimmbaren optischen Bandpaßfilter (1) in Form eines optischen Gitterspektrometers mit einer Eingangsapertur (25), einem Gitter (24) in nahezu Littrow-Anordnung, einem abbildenden Spiegel (27), einer Mehrzahl von Umlenkspiegeln (15 bis 22) und einer Ausgangsapertur(26), auf die eine Auswerteeinheit (3) folgt, die ein optoelektronisches Detektorsystem (6, 7) mit einer elektronischen Signalverarbeitung umfaßt, wobei die Abstimmung des Bandpaßfilters (23) durch Verdrehen des Gitters (24) um seine Hochachse erfolgt, **dadurch gekennzeichnet,** **daß** der zu überwachende Strahl die Anordnung mehrfach durchläuft, wobei durch die Einzelelemente (25, 24, 27, 15 bis 22, 26) sowohl ein Aufbau nach Ebert als auch ein Aufbau nach Fastie realisiert wird, die vom Strahl seriell durchlaufen werden.

10. Verfahren nach Anspruch 9, **dadurch gekennzeichnet,** **daß** der Strahl zunächst einen Ebert-Aufbau und anschließend einen Fastie-Aufbau durchläuft.

11. Verfahren nach Anspruch 9, **dadurch gekennzeichnet,** **daß** der Strahl zunächst einen Fastie-Aufbau und anschließend einen Ebert-Aufbau durchläuft.

## Claims

1. Array for monitoring the performance of DWDM multi-wavelength systems, with an optical bandpass filter (1) in the form of an optical spectrometer having an inlet aperture (25) and an outlet aperture (26), the outlet aperture being followed by an evaluation unit (3) which comprises an opto-electronic detector system (6, 7) with electronic signal processing,
**characterized in that**
the optical bandpass filter (1) is designed in the form of a narrow-band and tunable optical grating spectrometer, also featuring the following:

- a grating (24) in almost a Littrow array, the tuning of the bandpass filter (1) being performed by rotating the grating (24) around its vertical axis;
- an imaging mirror (27); and
- a plurality of deflection mirrors (15 to 22);
- the inlet aperture (25), the grating (24), the imaging mirror (27), the plurality of deflection mirrors (15 to 22) and the outlet aperture (26) being arranged such that a multiple beam passage is achieved, the individual components (25, 24, 27, 15 to 22, 26) being arranged such that both a configuration according to Ebert and a configuration according to Fastie are realized, and the beam first passes through a configuration according to Ebert, and then a configuration according to Fastie or vice versa.

2. Array according to claim 1,
**characterized in that**
in order to avoid polarization-dependent reflections as a grating (24), such a grating is provided with ruled grating, which ensures an almost vertical incidence onto the grating (24).

3. Array according to claims 1 or 2,
**characterized in that**
it exhibits a dielectric pre-filter (23) for suppressing wavelengths outside the measurement range, which, owing to the repeated passage, multiplies its effective quality.

4. Array according to one of the above claims,
**characterized in that**
the grating (24) is designed for a rotating movement or for a periodically oscillating movement for wavelength adjustment.

5. Array according to one of the above claims,
**characterized in that**
the grating (24) is coupled to an optical position sensor (28) for position detection.

6. Array according to one of the above claims,
**characterized in that**
it exhibits an auxiliary laser (41) to scan the moving grating (24) in order to obtain a synchronizing signal for wavelength assignment of the output signal of the array.

7. Array according to one of the above claims,
**characterized in that**
it exhibits a position sensor (28) for detecting the position of the grating (24) and thus for obtaining a position signal (8) of the moving grating (24).

8. Array according to claim 7,
**characterized in that** the position sensor (28) comprises a linear photodiode (46) and an incremental scale (45) mounted in front of it.

9. Method for monitoring the performance of DWDM multi-wavelength systems with a narrow-band and tunable optical bandpass filter (1) in the form of an optical grating spectrometer having an inlet aperture (25), a grating (24) in almost a Littrow array, an imaging mirror (27), a plurality of deflection mirrors (15 to 22) and an outlet aperture (26) which is followed by an evaluation unit (3) comprising an opto-electronic detector system (6, 7) with electronic signal processing, the tuning of the bandpass filter (23) being performed by rotating the grating (24) around its vertical axis,
**characterized in that**,
the beam to be monitored passes through the array several times, the individual elements (25, 24, 27, 15 to 22, 26) realizing both a configuration according to Ebert and a configuration according to Fastie, through which the beam passes serially.

10. Method according to claim 9,
**characterized in that**,
the beam first passes through an Ebert configuration and thereafter through a Fastie configuration.

11. Method according to claim 9,
**characterized in that**,
the beam first passes through an Fastie configuration and thereafter through an Ebert configuration.

**Revendications**

1. Dispositif de surveillance de la puissance de systèmes à longueurs d'onde multiples munis d'un filtre optique passe-bande (1) sous forme de spectromètre optique muni d'une ouverture d'entrée (25) et d'une ouverture de sortie (26); en aval de l'ouverture de sortie étant située une unité d'évaluation (3) comprenant un système de détection optoélectronique (6,7) équipé d'un système de traitement électronique des signaux,
**caractérisé en ce que**
le filtre optique passe-bande (1) est prévu sous forme d'un spectromètre optique à réseau, qu'il est réalisé à bande étroite et ajustable et comporte par ailleurs les éléments suivants :

- un réseau (24) dans une disposition proche de celle de Littrow, le filtre passe-bande (1) étant ajusté par une rotation du réseau (24) autour de son axe vertical ;
- un miroir imageur (27) ; et
- une multitude de miroirs de déviation (15 à 22);
- l'ouverture d'entrée (25), le réseau (24), le miroir imageur (27), la multitude de miroirs de déviation (15 à 22) et l'ouverture de sortie (26) étant disposés de manière à obtenir un passage multiple des rayons, les composants individuels (25, 24, 27, 15 à 22, 26) étant disposés de manière à réaliser un montage selon Ebert ainsi qu'un montage selon Fastile et de manière à permettre au rayon de traverser d'abord le montage selon Ebert et ensuite un montage selon Fastie ou inversement.

2. Dispositif selon la revendication 1, **caractérisé en ce que** le réseau (24) utilisé est un réseau gravé (« ruled grating ») garantissant une incidence quasi verticale sur le réseau (24), ceci dans le but d'éviter des réflexions dues à une polarisation.

3. Dispositif selon l'une des revendications 1 ou 2, **caractérisé en ce qu'**elle comporte un préfiltre diélectrique (23) permettant de supprimer les longueurs d'onde situées en dehors de la plage de mesure, celui-ci multipliant son efficacité grâce au passage multiple.

4. Dispositif selon l'une des revendications précédentes, **caractérisé en ce que** le réseau (24) est adapté pour permettre une rotation ou un mouvement d'oscillation périodique pour le réglage de la longueur d'onde.

5. Dispositif selon l'une des revendications précédentes, **caractérisé en ce que** le réseau (24) est couplé à un capteur de position optique (28) prévu pour l'enregistrement de la position.

6. Dispositif selon l'une des revendications précédentes, **caractérisé en ce qu'**il comporte un laser auxiliaire (41) permettant le balayage du réseau en mouvement (24) pour l'obtention d'un signal de synchronisation pour l'affectation de la longueur d'onde du signal de sortie du dispositif.

7. Dispositif selon l'une des revendications précédentes, **caractérisé en ce qu'**il comporte un capteur de position (28) permettant la détection de la position du réseau (24) et donc l'obtention d'un signal de position (8) du réseau en mouvement (24).

8. Dispositif selon la revendication 7, **caractérisé en ce que** le capteur de position (28) comprend une photodiode sous forme de lignes (46) et une échelle graduée incrémentale montée en aval (45).

9. Procédé de surveillance de la puissance de systèmes à ondes multiples DWDM munis d'un filtre optique passe-bande (1) sous forme de spectromètre optique à réseau ayant une ouverture d'entrée (25), un réseau (24) dans une disposition proche de celle de Littrow, un miroir imageur (27), une multitude de miroirs de déviation (15 à 22) et une ouverture de sortie (26); en aval de l'ouverture de sortie étant située une unité d'évaluation (3) comprenant un système de détection optoélectronique (6,7) doté d'un traitement électronique des signaux, le filtre passe-bande (23) étant ajusté par rotation du réseau (24) autour de son axe vertical,
**caractérisé en ce que**
le rayon à surveiller traverse plusieurs fois le dispositif, les composants individuels (25, 24, 27, 15 à 22) permettant la réalisation et d'un montage selon Ebert et d'un montage selon Fastie qui sont traversés en série par le rayon.

10. Dispositif selon la rev ndication 9, **caractérisé en ce que** le rayon traverse d'abord un montage d'Ebert et ensuite un montage de Fastie.

11. Dispositif selon la revendication 9, **caractérisé en ce que** le rayon traverse d'abord un montage de Fastie et ensuite un montage d'Ebert.

Fig. 1

Fig. 2

Fig. 3

Fig. 4